Europäisches Patentamt

European Patent Office

Office européen des brevets

(11) Veröffentlichungsnummer: **0 288 786 B1**

(19)

(12) # EUROPÄISCHE PATENTSCHRIFT

(45) Veröffentlichungstag der Patentschrift:
06.03.91 Patentblatt 91/10

(51) Int. Cl.⁵: **B23Q 3/00, B23B 31/16**

(21) Anmeldenummer: 88105444.9

(22) Anmeldetag: 06.04.88

(54) **Spannvorrichtung für Werkstücke.**

(30) Priorität: 11.04.87 DE 3712450
19.02.88 DE 3805207

(43) Veröffentlichungstag der Anmeldung:
02.11.88 Patentblatt 88/44

(45) Bekanntmachung des Hinweises auf die
Patenterteilung:
06.03.91 Patentblatt 91/10

(84) Benannte Vertragsstaaten:
AT BE CH ES FR GB IT LI LU NL SE

(56) Entgegenhaltungen:
AT-B- 198 095
CH-A- 78 132
DE-A- 1 552 432

(56) Entgegenhaltungen:
DE-C- 69 833
DE-C- 3 626 863
US-A- 4 353 561
SOVIET INVENTIONS ILLUSTRATED, Sektion
Mechanik, Woche 8712, 1. April 1987, Zusammenfassung Nr. 084953 P54, Derwent Publications Ltd., London, GB; & SU - A - 1 247 177
(SHVETSOV V.M.) 30.07.1986

(73) Patentinhaber: Klaus, Lieselotte, geb. Siebel
Nordstrasse 37
W-5905 Freudenberg (DE)

(72) Erfinder: Der Erfinder hat auf seine Nennung
verzichtet

(74) Vertreter: Pürckhauer, Rolf, Dipl.-Ing.
Friedrich-Ebert-Strasse 27 Postfach 10 09 28
W-5900 Siegen 1 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Spannvorrichtung für Werkstücke, mit drei oder mehr auf oder in einem Tisch oder einer Planscheibe strahlenförmig angeordneten Spannbacken, die auf je einer Spindel verstellbar angeordnet sind, wobei die Spindeln über Kegelritzel mit einem frei drehbar gelagerten Kegelrad wahlweise zur gleichzeitigen Verstellung aller Spannbacken in Eingriff und zur Einzelverstellung der Spannbacken durch Ausrücken des Kegelrades gemeinsam außer Eingriff bringbar sind.

Eine Spannvorrichtung dieser Gattung ist aus der DE-C-69 833 bekannt. Bei der bekannten Spannvorrichtung sitzen die Kegelritzel an den äußeren Enden der Spindeln und greifen an einem einen großen Durchmesser aufweisenden Kegelzahnkranz an, der in einer Nut einer Planscheibe gelagert ist, die auf der Nabe einer weiteren Scheibe mit Gewinde sitzt. Durch Zurückschrauben der Planscheibe kann der Kegelzahnkranz außer Eingriff mit den Kegelritzeln der Spindeln gebracht werden. Der konstruktive Aufwand ist bei dieser bekannten Spannvorrichtung groß, und ein Nachrüsten vorhandener Planscheiben mit dieser Spannvorrichtung ist nicht möglich. Außerdem ist diese bekannte Spannvorrichtung nur für Werkstücke mit relativ kleinem Durchmesser geeignet.

Der Erfindung liegt die Aufgabe zugrunde, eine universell verwendbare Spannvorrichtung zu schaffen, die auch nachrüstbar ist und bei der mit geringem konstruktivem Aufwand eine schnelle und einfache Umstellung von Einzel- auf Gemeinsamantrieb möglich ist.

Diese Aufgabe wird durch die kennzeichnenden Merkmale des Patentanspruchs 1 gelöst. Zweckmäßige und vorteilhafte Ausgestaltungen sind in den Unteransprüchen angegeben.

Die erfindungsgemäße Spannvorrichtung ist nicht nur als Neubau, sondern auch zum Nachrüsten geeignet. Als separate Vorrichtung kann sie auch in Form einer Adaptereinrichtung auf vorhandene Tische oder Planscheiben aufgesetzt werden. Sie ist bei Maschinen zum Drehen und/oder Bohren und auch bei Schweißtischen einsetzbar und ermöglicht auch das Einspannen von Werkstücken mit großem Durchmesser. Durch Anordnung der Spannbacken mit Spannblöcke auf den Spindeln, wobei die Spannblöcke Kraft- und Sicherheitsspannbacken aufnehmen, wird die Vielfalt der Einsatzmöglichkeiten der Spannvorrichtung noch erhöht, die insbesondere für große und schwere Werkstücke geeignet ist.

In der Zeichnung ist schematisch vereinfacht ein Ausführungsbeispiel der Erfindung dargestellt. Dabei zeigt bzw. zeigen

Fig. 1 eine Draufsicht,

Fig. 2 einen Teilschnitt nach der Linie II-II in Fig. 1,

Fig. 3 schematisch eine Draufsicht auf eine Planscheibe mit mehreren unterschiedlich ausgebildeten zusätzlichen Kraft- und Sicherheits-Spannvorrichtungen,

Fig. 4 eine schematische Draufsicht einer auf eine Planscheibe aufgesetzten Spannbackenanordnung,

Fig. 5 einen Schnitt nach der Linie V-V in Fig. 4,

Fig. 6 eine schematische Draufsicht einer in eine Planscheibe eingesetzten Spannbackenanordnung,

Fig. 7 einen Schnitt nach der Linie VII-VII in Fig. 6,

Fig. 8 einen Schnitt nach der Linie VIII-VIII in Fig. 4 oder Fig. 6,

Fig. 9 teilweise geschnitten weitere Führungsmöglichkeiten einer auf oder in die Planscheibe gesetzten Spannvorrichtung, die

Fig. 10 bis 18 verschiedene mögliche oder denkbare profilierte Spannbacken,

Fig. 19 in schematischer Draufsicht weitere Spannbackenausführungen für Außen- oder Innenspannen und

Fig. 20 einen Schnitt nach der Linie XX-XX in Fig. 19.

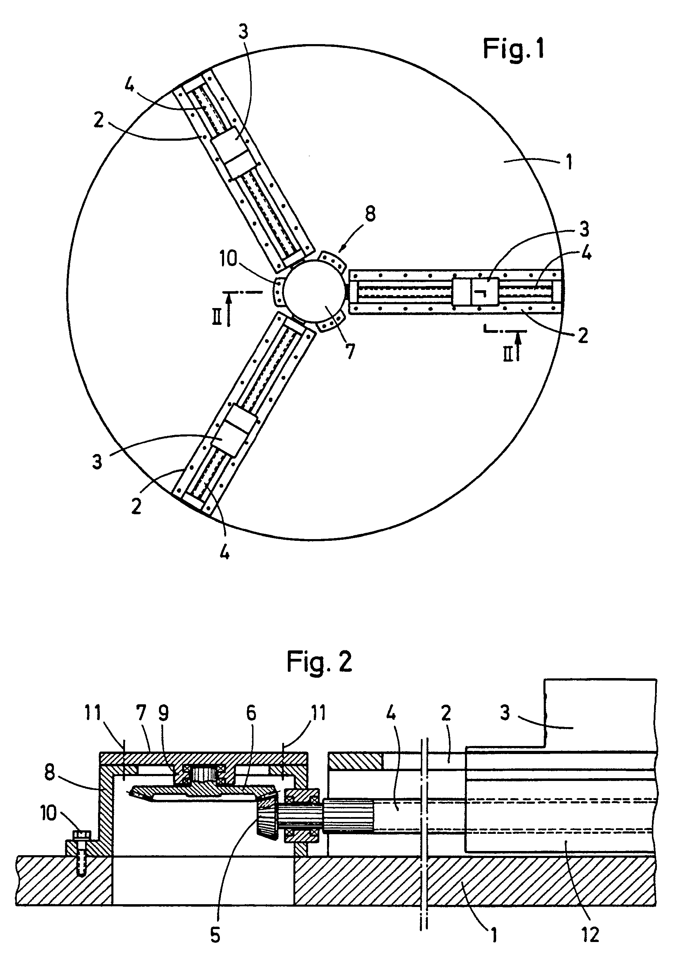

An einer Planscheibe oder auf einem Tisch 1 sind strahlenförmig mehrere (hier drei) Führungen 2 für Spannbacken 3 angeordnet, die mittels Spindeln 4 verstellbar sind, an deren inneren Enden, wie Fig. 2 an einer der Spindeln 4 zeigt, je ein Kegelritzel 5 sitzt. Alle Kegelritzel 5 greifen in ein gemeinsames Kegelrad 6 ein, das beim dargestellten Ausführungsbeispiel am Deckel 7 eines in der Mitte des Tisches oder der Planscheibe 1 angeordneten Gehäuses 8 frei drehbar in einem Lager 9 sitzt. Das Gehäuse 8 kann auf den Tisch oder die Planscheibe 1 auf- oder angeschraubt werden, wie bei 10 in Fig. 2 angedeutet ; es kann aber auch integrierter Bestandteil des Tisches oder der Planscheibe 1 sein. Die dargestellte Planscheibe 1 kann auch eine Adapterscheibe sein, so daß die ganze Spannvorrichtung ein separates Teil ist, das auf einen Tisch oder eine Planscheibe aufgesetzt oder für sich verwendet werden kann.

Zum zentrierten Einspannen von runden Werkstücken, z.B. Flanschen, die auf einem Takttisch gebohrt werden, braucht nur eine der Spindeln 4 gedreht zu werden. Die anderen Spindeln 4 werden dann über das Kegelrad 6 angetrieben. Bei Übergang auf andere Werkstück-Durchmesser ist ein erneutes Zentrieren nicht erforderlich.

Soll die Spannvorrichtung in eine solche für Einzelverstellung umgewandelt werden, so wird beim dargestellten Ausführungsbeispiel der Deckel 7, der mit dem Gehäuse 8 bei 11 verschraubt ist, mitsamt dem Kegelrad 6 vom Gehäuse 8 abgenommen, so daß die Spindeln 4 einzeln verstellt werden können, wenn beispielsweise ein exzentrisches Einspannen eines Werkstücks notwendig ist. Die Anordnung kann auch so getroffen sein, daß das Kegelrad 6 auf andere Weise, z.B. mechanisch oder mit Hilfe eines Druckmittelzylinders (nicht dargestellt), aus- oder eingerückt wird.

Wenn die Spannvorrichtung wieder zum Zentrieren mit gemeinsamer Verstellung der Spindeln 4 eingerichtet werden soll, so werden die Spannbacken 3 zunächst gegen einen Zentrieranschlag bewegt, der von dem Gehäuse 8 oder durch ein gesondertes, mittig einsetzbares Rundteil gebildet werden kann. In der dann gegebenen Stellung der Spannbacken 3 wird beim dargestellten Ausführungsbeispiel der Deckel 7 mit dem Kegelrad 6 wieder aufgesetzt, oder das Kegelrad 6 wird auf die vorerwähnte andere Weise wieder eingerückt.

Bei besonders langen Spindeln 4 können Zwischenlager (nicht dargestellt) für diese vorgesehen werden, wobei auf jeder Teillänge Spindelmuttern 12 vorgesehen sind, auf denen die Spannbacken 3 lösbar befestigt sind.

Bei einigen Anwendungsmöglichkeiten dieser Spannvorrichtung, z.B. bei schnellaufenden Planscheiben und schweren Werkstücken, kann die Einspannkraft etwas zu gering sein. Daher können zusätzliche Kraft- und Sicherheitsspannvorrichtungen mit dem jeweiligen Werkstück anpaßbaren Spannbacken vorgesehen werden, die eine sichere Einspannung ermöglichen.

Nach dem Zentrierspannen (mit Hilfe der vorbeschriebenen Spannvorrichtung auch außenmittig einer Planscheibe) ist ein Kraft- und Sicherheitsspannen möglich, insbesondere dann, wenn vier oder mehr Zentrierspannbacken 3 vorgesehen sind, so daß es vorkommen kann, daß die eine und/oder andere der Spannbacken 3 nicht richtig am Werkstück anliegt, zumal dann, wenn letzteres noch unbearbeitet und/oder unrund ist.

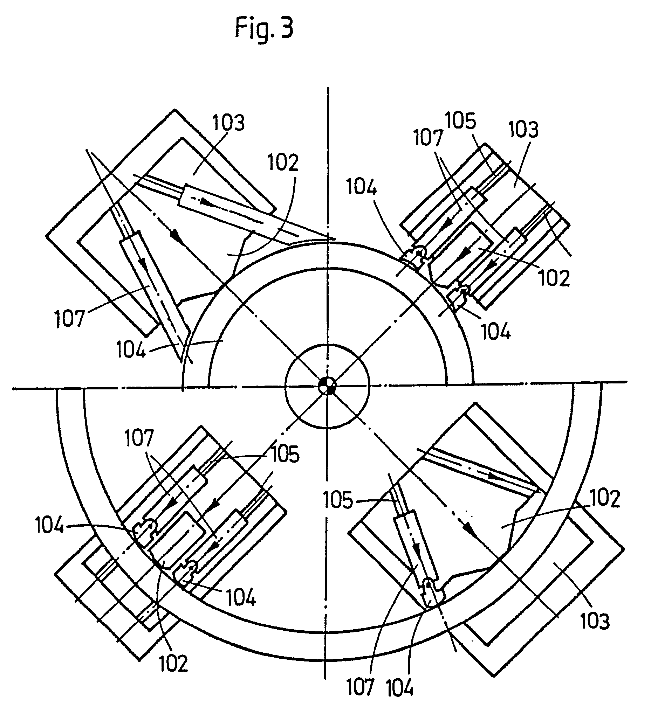

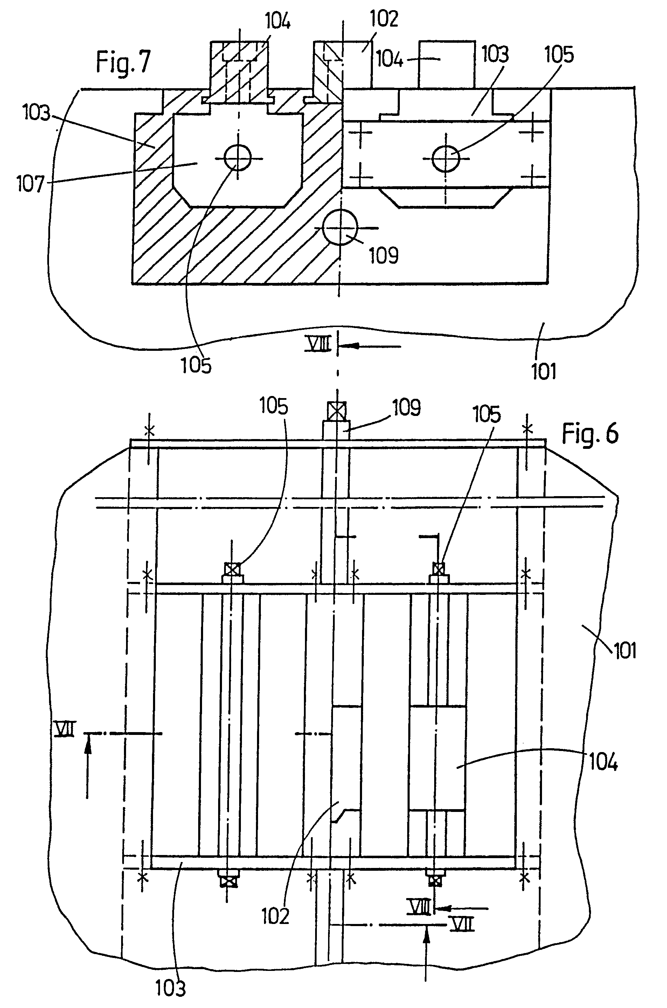

In Fig. 3 sind verschiedene Ausführungsformen und Anwendungsbeispiele der Spannvorrichtung schematisch dargestellt, und zwar in Draufsicht auf eine hier selbst nicht dargestellte Planscheibe 101 (siehe z.B. Fig. 5). Die obere Hälfte der Fig. 3 zeigt Möglichkeiten einer Außenspannung und die untere Hälfte einer Innenspannung. Jede Zentrierspannbacke 102 befindet sich in oder auf einem Spannbock 103, der mit einer der Spindeln 4 (Fig. 1) verstellt werden kann.

Auf oder in jedem Spannblock 103 sind Kraft- und Sicherheitsspannbacken 104 für sich anstellbar geführt, die entweder durch Spindeln 105, wie dargestellt, oder durch Druckmittelzylinder oder elektrisch angetrieben werden können. Die zusätzlichen Spannbacken 104 sind in verschiedenen Ausführungen dargestellt. Die Spannbacke 104 oben links in Fig. 3 hat eine schräge Anlagefläche 106 und ist im Spannblock 103 auch schräg geführt. Einige Spannbacken 104 sind, wie angedeutet, an der Spindelmutter 107 begrenzt schwenkbar, um sich der Kontur eines im wesentlichen runden, aber noch unbearbeiteten Werkstücks 108 anpassen zu können ; sie können auch starre Normbacken sein.

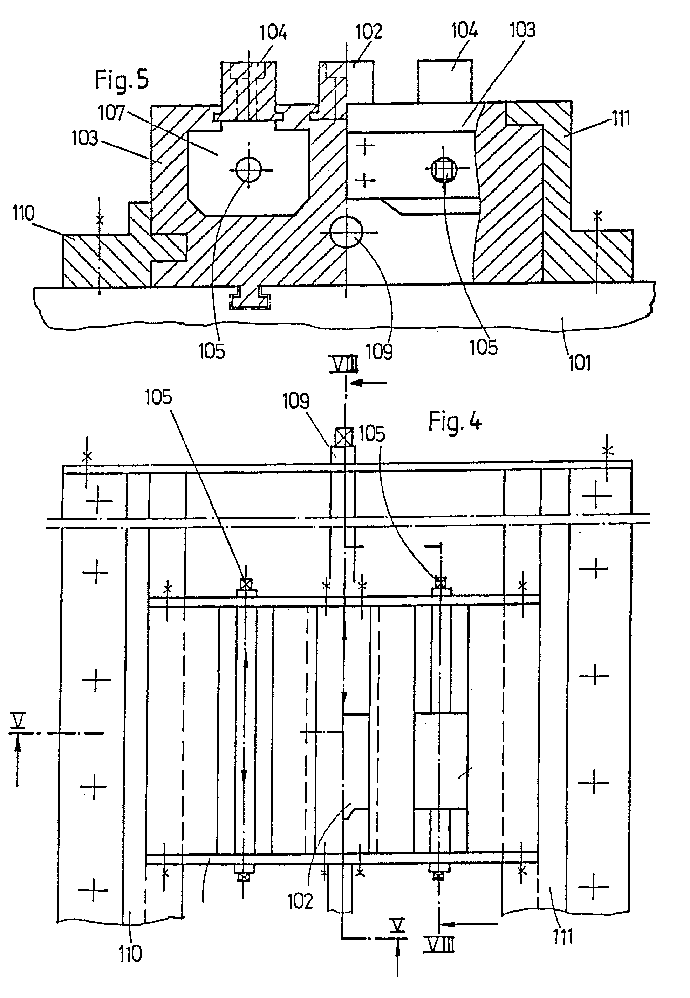

Die Fign. 4 und 5 zeigen eine Draufsicht bzw. einen versetzten Schnitt eines Spannblocks 103 mit einer Hauptspindel 109 zum Zentrierspannen und mit den Spindeln 105 für die Kraft- und Sicherheitsspannbacken 104. Bei diesem Ausführungsbeispiel ist die Spannvorrichtung auf die Planscheibe 101 aufgesetzt und durch Führungen 110 (links in den Fign. 4 und 5) oder 111 (rechts in den Fign. 4 und 5) geführt.

In gleicher Weise zeigen die Fign. 6 und 7 ein Ausführungsbeispiel, bei dem die Spannvorrichtung in die Planscheibe 101 eingelassen ist. Hier gelten die gleichen Bezugszeichen wie in den vorangehenden Fign. 3 bis 5.

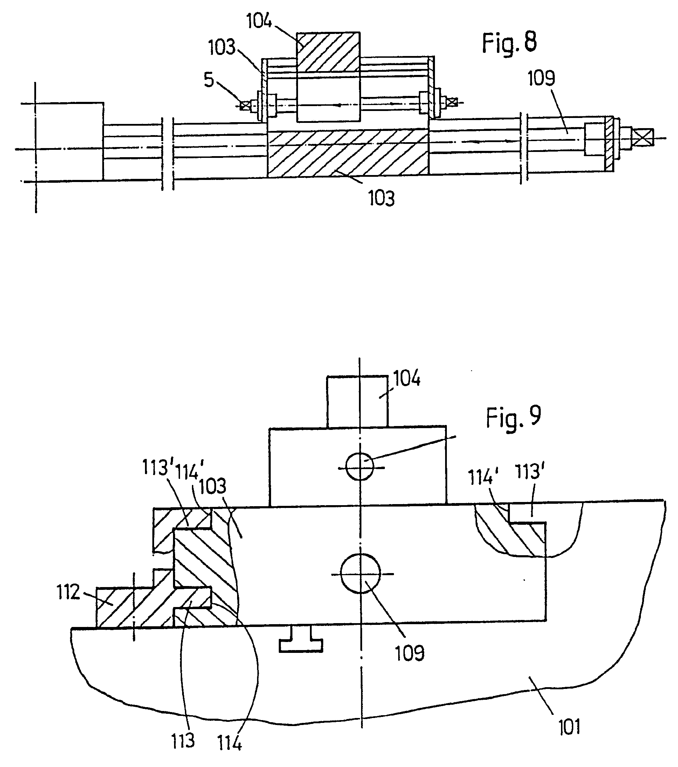

Einen Längsschnitt durch eine Spannvorrichtung, d.h. radial zur Planscheibe 101, zeigt Fig. 8. Auch hierin sind die Einzelbauteile an den Bezugszeichen erkennbar, wie sie in den vorangehenden Fign. 3 bis 5 verwendet werden.

Fig. 9 zeigt teilweise geschnitten drei verschiedene Führungsmöglichkeiten für den Spannblock 103 in der Planscheibe 101 (recht in Fig. 9) und auf der Planscheibe 101 (links in Fig. 9). Hier ist ein Führungsstück 112 vorgesehen, das mit einer Führungsleiste 113 in eine Nut 114 des Spannblocks 103 eingreift. Zusätzlich oder alternativ kann eine Führungsleiste 113' in eine nach oben und zum Rand des Spannblocks 103 offene Nut 114' eingreifen. Rechts in Fig. 9 wird die Leiste 113' durch die Planscheibe 101 selbst gebildet.

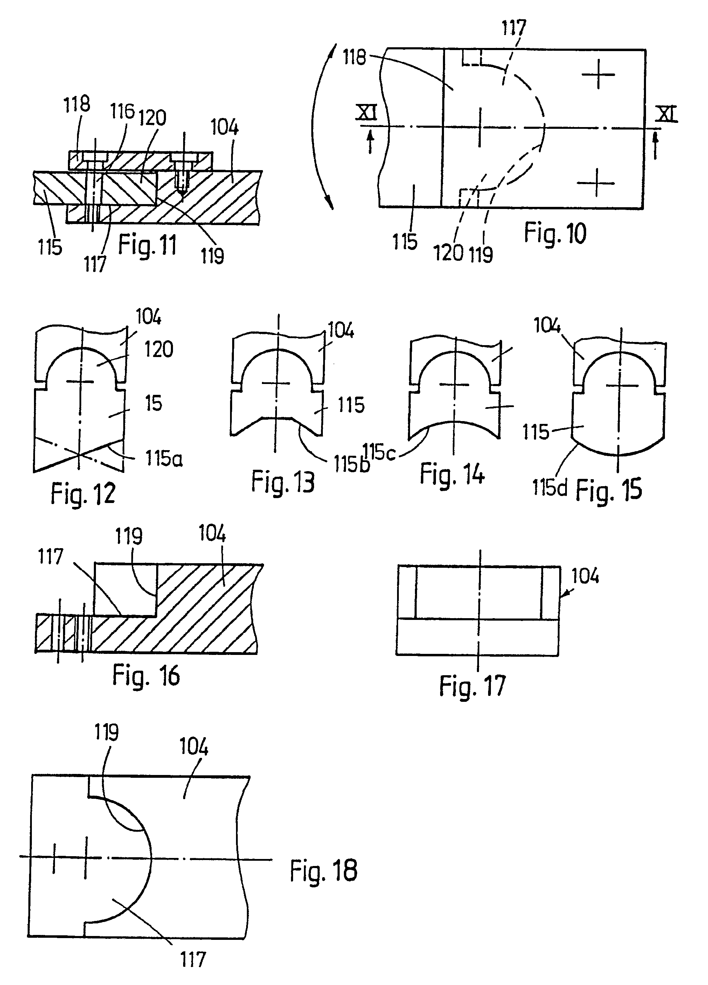

Die Fign. 10 und 11 zeigen eine Spannbacke 4 mit einem Druckstück 115, das in dieser um einen Bolzen 116 in einer Einbuchtung 117 der Spannbacke 104 begrenzt schwenkbar gelagert ist. Die Einbuchtung 117 ist durch eine Platte 118 abgedeckt und weist eine Rundung 119 auf, die dem Radius eines runden Ansatzes 120 des Druckstücks 115 entspricht und den Spanndruck aufnimmt, während der Bolzen 116 nur Fixierungsfunktion hinsichtlich des Schwenkpunktes des Druckstücks 115 hat. Der Körper der Spannbacke 104 ohne Druckstück 115 ist in drei Ansichten in den Fign. 16 bis 18 herausgezeichnet.

Die Fign. 12 bis 15 zeigen verschiedene Ausgestaltungen des Druckstücks 115, und zwar in Fig. 12 mit einer schrägen Anlagefläche 115a, die auch umgedreht werden kann, wie strichpunktiert angedeutet. Die Anlagefläche 115b nach Fig. 13 kann sich bei Außenspannung Unebenheiten des Werkstücks anpassen. Dies gilt auch für die Anlagefläche 115c nach Fig. 14. Die Anlagefläche 115d nach Fig. 15 ist vorwiegend für Innenspannen vorgesehen. Die Beispiele sind beliebig erweiterbar.

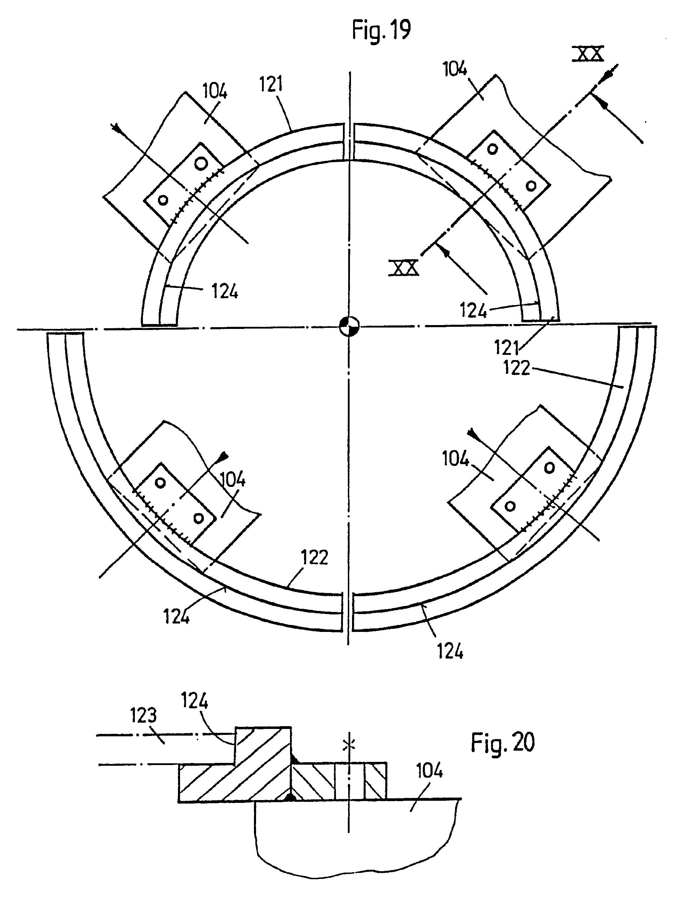

Die Fign. 19 und 20 zeigen weitere Möglichkeiten der Ausgestaltung von Druckstücken und Anlageflächen, und zwar in der oberen Hälfte von Fig. 19 für Außenspannen und in der unteren Hälfte dieser Figur für Innenspannen. Die Druckstücke sind hier als Ringsegmente 121 für Außenspannen und 122 für Innenspannen ausgebildet. Es handelt sich um abgestufte Ringsegmente 121 bzw. 122, wie die Schnittdarstellung nach Fig. 20 zeigt, so daß ein hier strichpunktiert angedeutetes Werkstück 123 in diese Abstufung 124 eingelegt werden kann. Diese Ausführungsform lohnt sich insbesondere bei der Bearbeitung großer Stückzahlen des gleichen Werkstücks.

**Ansprüche**

1. Spannvorrichtung für Werkstücke, mit drei oder mehr auf oder in einem Tisch oder einer Planscheibe strahlerförmig angeordneten Spannbacken, die auf je einer Spindel verstellbar angeordnet sind, wobei die Spindeln (4) über Kegelritzel (5) mit einem frei drehbar gelagerten Kegelrad (6) wahlweise zur gleichzeitigen Verstellung aller Spannbacken (3) in Eingriff und zur Einzelverstellung der Spannbacken (3) durch Auskuppeln des Kegelrades (6) gemeinsam außer Eingriff bringbar sind, dadurch gekennzeichnet, daß die Kegelritzel (5) an der inneren Enden der Spindeln (4) angeordnet sind und das Kegelrad (6) in der Mitte des Tisches oder der Planscheibe (1) in einem Gehäuse (8) mit einem abnehmbaren Deckel (7) sitzt, in dessen Mitte sich ein Lager (9) für das Kegelrad (6) befindet.

2. Spannvorrichtung nach Anspruch 1, dadurch gekennzeichnet, daß das Gehäuse (8) so angeordnet ist, daß das Kegelrad (6) von oben in die Kegelritzel (5) eingreift.

3. Spannvorrichtung nach Anspruch 1, dadurch gekennzeichnet, daß das Gehäuse (8) so angeordnet ist, daß das Kegelrad (6) in die Kegelritzel (5) von unten eingreift.

4. Spannvorrichtung nach einem der Ansprüche 1 bis 3, dadurch gekennzeichnet, daß das Gehäuse in den Tisch oder die Planscheibe (1) eingelassen ist.

5. Spannvorrichtung nach einem der Ansprüche 1 bis 3, dadurch gekennzeichnet, daß das Gehäuse durch ein Mittelloch des Tisches oder der Planscheibe (1) gebildet ist.

6. Spannvorrichtung nach einem der Ansprüche 1 bis 3, dadurch gekennzeichnet, daß sie Teil einer auf einem Tisch (1) aufsetzbaren Adapterscheibe ist.

7. Spannvorrichtung nach einem der Ansprüche 1 bis 6, dadurch gekennzeichnet, daß die Spannbacken (102) mit Spannblocks (103) auf den Spindeln (109) sitzen und daß in, an oder auf den Spannblocks (103) einzeln betätigbare zusätzliche Kraft- und Sicherheitsspannbacken (104) vorgesehen sind.

8. Spannvorrichtung nach Anspruch 7, dadurch gekennzeichnet, daß mehrere zusätzliche Kraft- und Sicherheitsspannbacken (104) pro Spannblock (103) vorgesehen sind.

9. Spannvorrichtung nach Anspruch 7 oder 8, dadurch gekennzeichnet, daß die Kraft- und Sicherheitsspannbacken (104) eine dem Werkstück angepaßte profilierte Andruckfläche (115a-d ; 121, 122) aufweisen.

10. Spannvorrichtung nach einem der Ansprüche 7 bis 9, dadurch gekennzeichnet, daß die Kraft- und Sicherheitsspannbacken (104) schräg anstellbar sind.

11. Spannvorrichtung nach einem der Ansprüche 7 bis 10, dadurch gekennzeichnet, daß die Kraft- und Sicherheitsspannbacken (104) ein begrenzt schwenkbar gelagertes Druckstück (115) aufweisen.

**Claims**

1. Clamping device for workpieces, with three or more clamping jaws which are arranged radially on or in a table or a face plate and which are each mounted adjustably on a spindle, wherein the spindles (4) can be optionally engaged by bevel pinions (5) with a freely rotatably mounted bevel gear (6) for simultaneous adjustment of all clamping jaws (3) and disengaged jointly by unmeshing the bevel gear (6) for separate adjustment of the clamping jaws (3), characterised in that the bevel pinions (5) are disposed at the inner ends of the spindles (4) and the bevel gear (6) is mounted in the middle of the table or face plate (1) in a housing (8) with a removable cover (7) in the centre of which is located a bearing (9) for the bevel gear (6).

2. Clamping device according to claim 1, characterised in that the housing (8) is arranged in such a way that the bevel gear (6) meshes with the bevel pinions (5) from above.

3. Clamping device according to claim 1, characterised in that the housing (8) is arranged in such a way that the bevel gear (6) meshes with the bevel pinions (5) from below.

4. Clamping device according to any of claims 1 to 3, characterised in that the housing is inserted in the table or face plate (1).

5. Clamping device according to any of claims 1 to 3, characterised in that the housing is formed by a centre hole of the table or face plate (1).

6. Clamping device according to any of claims 1 to 3, characterised in that it forms part of an adapter plate which can be mounted on a table (1).

7. Clamping device according to any of claims 1 to 6, characterised in that the clamping jaws (102) are mounted with clamping blocks (103) on the spindles (109) and that in or on the clamping blocks (103) are provided separately operated, additional, power-driven and safety clamping jaws (104).

8. Clamping device according to claim 7, characterised in that several additional power-driven and safety clamping jaws (104) are provided for each clamping block (103).

9. Clamping device according to claim 7 or 8, characterised in that the power-driven and safety clamping jaws (104) comprise a profiled contact pressure face (115a-d ; 121, 122) adapted to the workpiece.

10. Clamping device according to any of claims 7 to 9, characterised in that the power-driven and safety clamping jaws (104) are obliquely adjustable.

11. Clamping device according to any of claims 7 to 10, characterised in that the power-driven and safety clamping jaws (104) comprise a thrust piece (115) which is pivotable to a limited extent.

## Revendications

1. Dispositif de serrage de pièces à usiner qui comporte trois ou plus de trois mâchoires de serrage disposées radialement sur ou dans une table ou un plateau et montées de manière à pouvoir se déplacer chacune sur une broche, les broches (4) en question pouvant être, par l'intermédiaire de piquons coniques (5), soit mises en prise avec une roue conique (6) montée de manière à pouvoir tourner librement pour le déplacement simultané de toutes les mâchoires (3) sont mises hors de prise par désaccouplement de la roue conique (6) pour le réglage individuel des mâchoires, caractérisé en ce que les pignons coniques (5) sont montés aux extrémités intérieures des broches (4) et que la roue conique est placée au milieu de la table ou du plateau (1) dans un carter (8) comportant un couvercle amovible (7) qui comprend en son milieu un palier (9) pour la roue conique (6).

2. Dispositif de serrage selon la revendication 1, caractérisé en ce que le carter (8) est disposé de telle manière que la roue conique (6) s'engage par en haut dans les piquons coniques (5).

3. Dispositif de serrage selon la revendication 1, caractérisé en ce que le carter (8) est disposé de telle manière que la roue conique (6) s'engage par le bas dans les pignons coniques (5).

4. Dispositif de serrage selon une des revendications 1 à 3, caractérisé en ce que le carter est inséré dans la table ou le plateau (1).

5. Dispositif de serrage selon une des revendications 1 à 3, caractérisé en ce que le carter est constitué par une ouverture médiane de la table ou du plateau (1).

6. Dispositif selon une des revendications 1 à 3, caractérisé en ce qu'il fait partie d'un disque d'adaptation qui peut se monter sur une table (1).

7. Dispositif de serrage selon une des revendications 1 à 6, caractérisé en ce que les mâchoires de serrage (102) sont montées sur des broches (109) avec des blocs de serrage (103) et en ce qu'il comporte, dans, contre ou sur ces blocs de serrage (103), des mâchoires de blocage et de sécurité (104) supplémentaires qui peuvent être commandées séparément.

8. Dispositif de serrage selon la revendication 7, caractérisé en ce qu'il comporte plusieurs mâchoires de blocage et de sécurité (104) par bloc de serrage (103).

9. Dispositif de serrage selon l'une des revendications 7 ou 8, caractérisé en ce que les mâchoires de blocage et de sécurité (104) comportent une surface d'appui (115 a-d ; 121, 122) présentant un profil adapté à celui de la pièce à usiner.

10. Dispositif de serrage selon une des revendications 7 à 8, caractérisé en ce que les mâchoires de blocage et de sécurité (104) peuvent être placées obliquement.

11. Dispositif de serrage selon une des revendications 7 à 10, caractérisé en ce que les mâchoires de blocage et de sécurité (104) comportent une pièce de compression (115) montée de manière à pouvoir pivoter entre certaines limites.

Fig.1

Fig. 2

# Fig. 3

Fig. 5

Fig. 4

Fig. 7

Fig. 6

Fig. 8

104

103

5

109

103

Fig. 9

104

113' 114' 103

114' 113'

112

109

113 114

101

Fig. 11

Fig. 10

Fig. 12

Fig. 13

Fig. 14

Fig. 15

Fig. 16

Fig. 17

Fig. 18

## Fig. 19

## Fig. 20